# FASCICULE DE BREVET EUROPEEN

(11) **EP 2 903 852 B1**
(45) Date de publication et mention de la délivrance du brevet: **28.12.2016**
(21) Numéro de dépôt: 13782745.7
(22) Date de dépôt: 24.09.2013
(51) Int. Cl.: B60L 3/04, B60L 11/18, H02H 3/087, H02J 7/02, H02H 3/02, H02H 7/18, B60L 15/00, H02J 5/00

(54) **SYSTEME DE CHARGE SANS CONTACT D'UNE BATTERIE DE VEHICULE AUTOMOBILE**
KONTAKTLOSES LADESYSTEM ZUM LADEN EINER KRAFTFAHRZEUGBATTERIE
CONTACTLESS CHARGING SYSTEM FOR CHARGING A MOTOR VEHICLE BATTERY

(30) Priorité: 01.10.2012 FR 1259248
(43) Date de publication de la demande: 12.08.2015
(73) Titulaire: Renault s.a.s., 92100 Boulogne-Billancourt (FR)
(72) Inventeur: HOUIVET, Jeanne, F-75015 Paris (FR); DOFFIN, Hugues, F-78530 Buc (FR)
(86) Numéro de dépôt international: PCT/FR2013/052232
(87) Numéro de publication internationale: WO 2014/053742

(56) Documents cités:
- FR-A1- 2 962 263
- US-A- 6 037 745

## Description

L'invention concerne la charge sans contact d'une batterie d'un véhicule automobile, et plus particulièrement, la mise en sécurité d'un véhicule automobile en cas de dysfonctionnement électrique lors d'une charge sans contact de la batterie.

Un système de charge sans contact d'une batterie d'un véhicule automobile se présente généralement sous la forme d'un circuit inductif primaire au sol et d'un circuit inductif secondaire embarqué à bord du véhicule. Le transfert d'énergie entre les deux circuits inductifs se fait par induction électromagnétique. Par rapport à un système de charge avec prise électrique, un tel système de charge présente les avantages suivants : il permet, d'une part, d'améliorer le confort et l'ergonomie de l'usager du fait qu'il n'y a pas de risque d'oubli de branchement ni de contraintes liées au poids de la prise. Il permet, d'autre part, d'avoir une tolérance de positionnement du système de charge, d'avoir un rendement équivalent au rendement d'un système de charge filaire. Il permet enfin de se situer toujours à la fréquence de résonance du circuit inductif constituant chacune des boucles émettrice et réceptrice du système de charge sans contact, et de garantir le meilleur rendement possible grâce à l'adaptation de la fréquence du système.

Une des limitations d'un système de charge sans contact est le temps de communication entre le système primaire intégré dans le sol et le système secondaire dans le véhicule. Cette communication peut se faire par wifi ou zigbee par exemple. Le délai de communication entraîne un décalage du transfert d'informations, notamment dans le sens de transfert allant du véhicule vers le sol. La puissance étant fournie par le circuit inductif primaire dans le sol, un retard dans la transmission d'une information entre le véhicule et le sol peut entraîner une puissance transmise par le circuit inductif primaire du sol pendant un temps supplémentaire qui peut endommager les appareils à bord du véhicule.

Par exemple, dans le cas d'une batterie qui se déconnecte du système de charge, les relais couplés aux bornes de la batterie s'ouvrent. Il n'y a donc plus de charge électrique connectée pour consommer l'énergie transmise par le circuit inductif primaire du sol au circuit inductif secondaire à bord du véhicule. Des dégradations des circuits électriques peuvent apparaître si le sol continue à envoyer de la puissance alors que la batterie est déconnectée par exemple, ou bien si le circuit inductif primaire dans le sol ne détecte pas suffisamment tôt un dysfonctionnement à bord du véhicule. Ce cas se produit puisque les informations sur l'état du système à bord sont communiquées au sol par un moyen de communication sans fil d'où un décalage au niveau de la transmission d'information.

En effet, le délai pour détecter un dysfonctionnement de la batterie par le véhicule puis pour recevoir un message de notification de ce dysfonctionnement au niveau du contrôleur de charge au sol devient trop important pour s'assurer que le chargeur embarqué ne subisse des détériorations.

Il est connu du document JP2012055086 un procédé permettant de fermer les relais couplés à la batterie uniquement lorsque la puissance d'alimentation extérieure par induction est détectée. Cependant, aucune solution n'est mentionnée dans le cas où les relais de la batterie s'ouvrent à cause d'un dysfonctionnement.

Le document US6037745 divulgue un dispositif de réception d'une onde électromagnétique pour la charge d'une batterie destinée à être embarquée à bord d'un véhicule automobile. Ce dispositif comporte un circuit inductif résonant couplé à la batterie via un pont redresseur, et des moyens de mise en court-circuit du circuit résonant sans mettre la batterie en court-circuit lors d'un dysfonctionnement.

L'invention se propose de fournir un système de charge sans contact d'une batterie d'un véhicule automobile garantissant lors d'un dysfonctionnement électrique à bord du véhicule, la coupure de la puissance émise par le circuit inductif primaire au sol avant tout risque d'endommagement à bord du véhicule.

Selon un aspect de l'invention, il est proposé un dispositif d'émission d'une onde électromagnétique pour la charge d'une batterie de véhicule automobile comprenant un circuit inductif primaire alimenté par un réseau d'alimentation.

Selon une caractéristique générale de l'invention, ledit dispositif d'émission comprend des moyens de commande aptes à couper l'alimentation du circuit inductif primaire lorsqu'ils détectent un court-circuit du circuit inductif secondaire.

Selon un autre aspect de l'invention, il est proposé dans un mode de réalisation un système de charge sans contact d'une batterie de véhicule automobile comprenant :
- un dispositif de réception d'une onde électromagnétique pour la charge d'une batterie destiné à être embarqué à bord d'un véhicule automobile, comprenant un circuit inductif secondaire couplé à la batterie via un pont redresseur et comprenant des moyens d'interruption commandée aptes à mettre le circuit inductif secondaire en court-circuit sans mettre la batterie en court-circuit lors d'un dysfonctionnement électrique à bord du véhicule automobile et,
- un dispositif d'émission tel que défini ci-dessus disposé à l'extérieur du véhicule automobile. Il est ainsi proposé un système de charge comprenant un circuit inductif primaire à l'extérieur du véhicule automobile alimenté par un réseau d'alimentation électrique, un circuit inductif secondaire embarqué à bord du véhicule automobile et couplé à la batterie via un pont redresseur, et des moyens d'interruption commandée aptes à mettre le circuit inductif secondaire en court-circuit sans mettre la batterie en court-circuit lors d'un dysfonctionnement électrique à bord du véhicule automobile, et plus particulièrement lors d'un disfonctionnement sur la partie du système de charge couplée à la batterie, et des moyens de commande aptes à couper l'alimentation du circuit inductif primaire lorsqu'ils détectent un court-circuit du circuit inductif secondaire. Et toute cette détection se faisant sans utiliser le moyen de communication sans fil entre le sol et le bord.

Lors d'un fonctionnement normal du système de charge, l'utilisation d'un pont redresseur permet de redresser le courant en sortie du circuit secondaire inductif pour alimenter la batterie et permettre ainsi sa recharge. Lors d'un dysfonctionnement électrique au niveau du véhicule automobile, les moyens d'interruption commandée permettent de mettre en court-circuit le circuit inductif secondaire et le pont redresseur permet d'empêcher une mise en court-circuit de la batterie.

Le pont redresseur comprend deux diodes dont les cathodes sont couplées à la borne positive de la batterie, leurs anodes étant reliées à deux diodes dont les anodes sont couplées à la borne négative de la batterie. Dans le cas où les moyens d'interruption commandée comprennent deux interrupteurs commandés aptes à mettre en court-circuit le circuit inductif secondaire, chacune des deux diodes dont les anodes sont couplées à la borne négative de la batterie est couplée en parallèle à un des interrupteurs commandés. Les deux diodes dont la cathode est couplée à la borne positive de la batterie n'étant pas court-circuitées, la batterie est maintenue électriquement déconnectée du circuit inductif secondaire.

En variante, au lieu des interrupteurs commandés, les moyens d'interruption commandée peuvent comprendre des thyristors montés tête bêche en parallèle ou bien un triac connecté(s) en parallèle à l'entrée du pont redresseur.

De préférence, le dispositif de réception comprend une capacité de commande des moyens d'interruption commandée couplée en parallèle à la batterie via des relais, en cas de perte du réseau 12V du véhicule.

Cette capacité de commande permet d'alimenter les moyens d'interruption commandée sans avoir recours au réseau 12 V du véhicule automobile. En effet, la tension aux bornes de la capacité augmente lorsque la batterie est déconnectée du circuit inductif secondaire puisque c'est cette capacité qui récupère l'énergie fournie par le système au sol, indépendamment d'un autre circuit d'alimentation que le circuit inductif secondaire. Le circuit inductif secondaire peut ainsi être mis en court-circuit et le système de charge peut par conséquent être coupé même si le dysfonctionnement électrique atteint le réseau 12 V du véhicule.

La capacité de commande peut correspondre à une capacité de filtrage et de lissage montée en parallèle à la sortie du pont redresseur.

Le dispositif de réception du système de charge peut comprendre deux relais couplés chacun à une borne respective de la batterie entre la batterie et le pont redresseur commandé. Les relais permettent de déconnecter la batterie du circuit inductif secondaire si besoin. Dans un cas où les relais ne s'ouvrent pas correctement alors qu'il y a un dysfonctionnement électrique, l'architecture du pont redresseur permet, lorsque le circuit inductif secondaire est mis en court-circuit, de déconnecter électriquement la batterie du circuit inductif secondaire. Le dispositif de réception du système peut également comprendre au moins un fusible couplé à une des bornes de la batterie. Le fusible permet d'ajouter une sécurité garantissant qu'aucun court-circuit de la batterie n'est possible même en cas de composant défaillant sur le pont redresseur. De plus le fusible permet de parer au dysfonctionnement des deux relais, et de déconnecter ainsi la batterie du reste du circuit inductif secondaire.

Le dispositif d'émission du système peut avantageusement comprendre un onduleur couplé au circuit inductif primaire et commandé par les moyens de commande qui peuvent comprendre un capteur de courant apte à mesurer le courant circulant dans le circuit inductif primaire et des moyens de régulation du courant aptes à commander l'ouverture et la fermeture des interrupteurs de l'onduleur et à réguler le rapport cyclique de l'onduleur et la fréquence du courant émis par l'onduleur pour la caler à la résonnance du système inductif.

Avantageusement, les moyens de commande du système peuvent comprendre un module de comparaison apte à comparer le courant mesuré à un seuil de courant dépendant du niveau de charge de la batterie.

Selon un autre aspect, il est proposé dans un mode de mise en oeuvre un procédé de charge sécurisée sans contact d'une batterie de véhicule automobile par transfert inductif de puissance entre un circuit inductif primaire à l'extérieur du véhicule automobile et un circuit inductif secondaire embarqué à bord du véhicule et couplé à la batterie.

Selon une caractéristique générale de l'invention, on met en court-circuit le circuit inductif secondaire lors d'un dysfonctionnement électrique à bord du véhicule automobile, et on commande la déconnexion du circuit inductif primaire du réseau d'alimentation électrique lorsqu'on détecte le court-circuit du circuit inductif secondaire par arrêt d'envoi des consignes de commutation à l'onduleur primaire par exemple.

De préférence, on commande la mise en court-circuit du circuit inductif secondaire à partir de la tension aux bornes d'une capacité montée en parallèle à la batterie via des relais.

Avantageusement, on mesure le courant circulant dans le circuit inductif primaire, et on détecte le court-circuit du circuit inductif secondaire à partir de la variation du courant circulant dans le circuit inductif primaire.

Le circuit primaire fonctionnant de préférence à sa fréquence de résonnance par régulation, cette fréquence est corrigée en permanence puisqu'elle peut varier au cours d'une même charge. Si on met des objets dans le véhicule par exemple, le poids augmente, la garde au sol diminue, donc la distance entre le circuit inductif primaire et le circuit inductif secondaire est modifié, ce qui implique une modification de la fréquence de résonnance. La consigne de fréquence est envoyée en permanence à l'onduleur, ceci implique l'optimisation du temps de détection de court-circuit au sol.

On compare avantageusement le courant mesuré à un seuil de courant dépendant du niveau de charge de la batterie.

D'autres avantages et caractéristiques de l'invention apparaîtront à l'examen de la description détaillée d'un mode de réalisation et d'un mode de mise en oeuvre, nullement limitatifs, et des dessins annexés, sur lesquels :
- la figure 1 représente, de manière schématique, un système de charge sans contact d'une batterie de véhicule automobile selon un mode de réalisation de l'invention ;
- la figure 2 présente un graphique illustrant la variation de tension aux bornes du circuit inductif primaire, la variation de tension aux bornes du circuit inductif secondaire, et la variation de courant dans le circuit inductif primaire lorsqu'un dysfonctionnement électrique survient au secondaire avec l'invention ;
- la figure 3 présente un organigramme d'un procédé de charge sécurisée sans contact d'une batterie de véhicule automobile selon un mode de mise en oeuvre de l'invention.

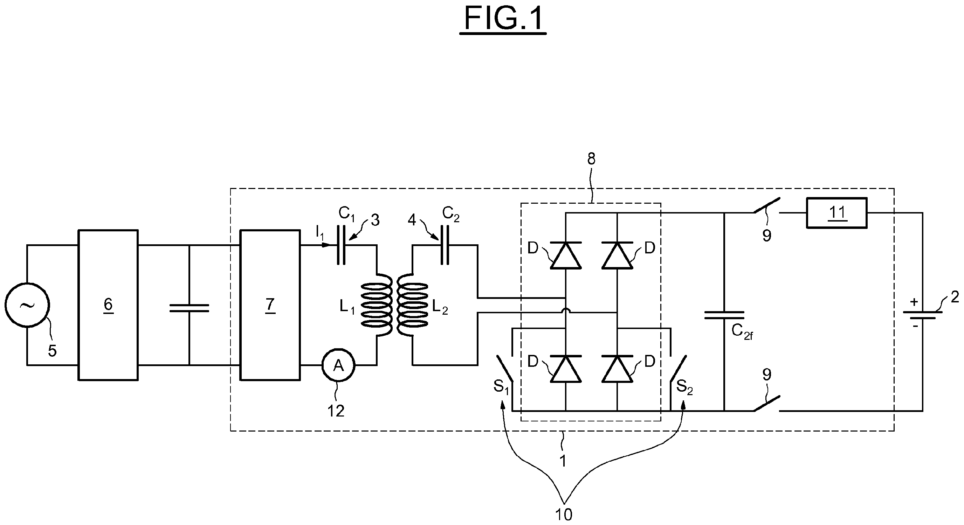

Sur la figure 1 est représenté un système 1 de charge sans contact d'une batterie 2 de véhicule automobile selon un mode de réalisation de l'invention.

Le système 1 de charge sans contact comprend un circuit inductif primaire 3 implanté dans le sol, par exemple au niveau d'une place de parking, et un circuit inductif secondaire 4 embarqué à bord du véhicule automobile.

Le circuit inductif primaire 3 est couplé à un réseau d'alimentation électrique 5 fournissant la puissance nécessaire au circuit inductif primaire 3 via un étage redresseur 6 et un onduleur 7. Le circuit inductif secondaire 4 est couplé à la batterie 2 via un pont redresseur 8 et deux relais 9 chacun couplé à une borne de la batterie 2. Les relais 9 peuvent s'ouvrir en cas de dysfonctionnement électrique dans le véhicule ce qui permet de découpler électriquement la batterie 2 du circuit inductif secondaire 4.

Le circuit inductif primaire 3 et le circuit inductif secondaire 4 comprennent chacun un élément inductif, respectivement L₁ et L₂, et un élément capacitif, respectivement C₁ et C₂, montés en série.

Le pont redresseur 8 comprend un pont de diodes D couplé en entrée au circuit inductif secondaire 4 et couplé en sortie à la batterie 2 via les relais 9. Le pont de diodes D comprend deux diodes dont la cathode est couplée à la borne positive « + » de la batterie 2 et deux diodes D dont l'anode est couplée à la borne négative « - » de la batterie 2.

Dans l'exemple illustré sur la figure 1, le pont redresseur 8 est couplé à des moyens d'interruptions 10 comportant deux interrupteurs commandés S₁ et S₂. Les deux interrupteurs commandés S₁ et S₂ sont respectivement couplés en parallèle à une des diodes dont l'anode est couplée à la borne négative « - » de la batterie 2.

Le système 1 de charge comprend également une capacité de commande C_{2f} permettant d'alimenter la commande des interrupteurs commandés S₁ et S₂. La capacité de commande C_{2f} est couplée en parallèle à la sortie du pont redresseur 8 ainsi qu'à la batterie 2 via les relais 9. Un relais 9 est ainsi couplé entre une borne « + » ou « - » de la batterie 9 et une borne de la capacité de commande C_{2f}. La capacité de commande C_{2f} peut, lors d'un fonctionnement normal du système 1 de charge sans contact, c'est-à-dire sans dysfonctionnement électrique, être confondue avec une capacité de filtrage et de lissage de la tension de sortie du pont redresseur 8.

Lors de l'ouverture d'au moins un des relais 9, la batterie 2 est électriquement découplée du circuit inductif secondaire 4. La tension aux bornes de la capacité de commande C_{2f} augmente alors rapidement étant donné qu'il n'y a plus de charge couplée au circuit inductif secondaire 4 pour absorber la puissance délivrée. Lorsque la tension de commande C_{2f} atteint un seuil de déclenchement, les interrupteurs commandés S₁ et S₂ des moyens d'interruption commandée 10 sont fermés de manière à court-circuiter les deux diodes D dont l'anode est couplée à la borne négative « - » de la batterie 2, et ainsi mettre le circuit inductif secondaire 4 en court-circuit.

Les deux diodes D dont la cathode est couplée à la borne positive « + » de la batterie 2 n'étant pas en court-circuit, la batterie 2 est maintenue électriquement déconnectée du circuit inductif secondaire 4.

Le système 1 comprend également, dans l'exemple illustré, un fusible 11 couplé en série entre la borne positive « + » et le relais 9 auquel cette borne est couplée. Le fusible 11 garantit ainsi que la batterie 2 ne soit pas mise en court-circuit même si un composant du pont redresseur 8 est défaillant.

La mise en court-circuit du circuit inductif secondaire 4 influe sur le comportement du circuit inductif primaire 3. En effet, le courant circulant dans le circuit inductif primaire 3 est modifié aussi bien en amplitude qu'en forme d'onde.

Le système 1 de charge sans contact comprend un capteur de courant 12 mesurant le courant I₁ circulant dans le circuit inductif primaire 3. La mise en court-circuit du circuit inductif secondaire 4 est détectée dès lors que le courant augmente.

Pour ne pas confondre une augmentation de courant due à la mise en court-circuit du circuit inductif secondaire 4 et une modification de la fréquence de résonance du système due à une modification de l'environnement, comme un rapprochement des deux circuits inductifs 3 et 4 par exemple, le seuil de détection est choisi de manière à être supérieure au courant pic du circuit inductif primaire 3.

La puissance délivrée par le circuit inductif primaire 3 varie en fonction du niveau de charge de la batterie 2, notamment car l'impédance de la batterie 2 varie au fur et à mesure de sa charge, et la consigne de puissance demandée par la batterie 2 évolue au cours du temps, alors que sa tension monte au fur et à mesure de la charge. Ainsi l'amplitude du courant I₁ circulant dans le circuit inductif primaire 3 varie en fonction du niveau de charge de la batterie 2. Le seuil de détection de la mise en court-circuit du circuit inductif secondaire 4 varie également en fonction du niveau de charge de la batterie 2 afin d'optimiser le temps et l'efficacité de la détection.

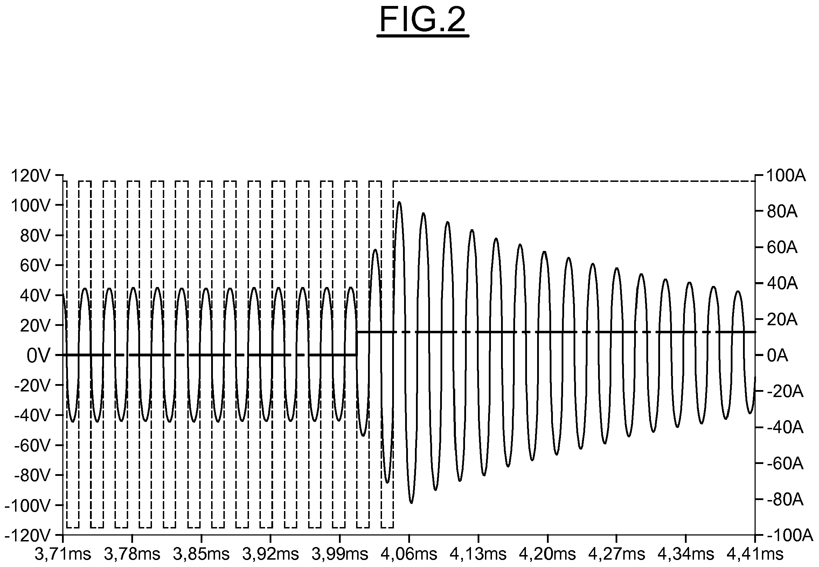

Par exemple, comme illustré sur la figure 2, pour une amplitude crête de 40 A pour le courant à la fréquence de résonance du circuit inductif primaire 3, le seuil de courant pour la détection peut être choisi égal à 80 A. On voit sur la figure 2, que lorsque le circuit inductif secondaire 4 est mis en court-circuit, c'est-à-dire lorsque la tension V_{cc_secondaire} correspondant à la consigne de mise en court-circuit, en trait mixte, passe de 0 à 1, l'amplitude du courant I₁, en trait plein, circulant sur le circuit inductif primaire 3 augmente jusqu'à atteindre une amplitude de 80 A. Lorsque l'amplitude du courant atteint 80 A, l'alimentation du circuit inductif primaire 3 par le réseau d'alimentation 5 est coupée. Ceci se traduit sur le graphique de la figure 2, par une tension constante, en trait en pointillés, aux bornes du circuit inductif primaire 3, et une chute de l'amplitude du courant I₁ circulant dans le circuit inductif primaire 3.

Dans le cas illustré sur la figure 1, où le réseau d'alimentation électrique 5 utilisé n'est pas une alimentation continue mais un redresseur, des ondulations apparaissent au niveau du courant circulant dans le circuit inductif primaire 3. Dans ce cas, il ne faut pas confondre les pics de courant dus aux ondulations liées au redressement du réseau avec un pic de courant primaire I₁ lié à un dysfonctionnement électrique qui se produit sur le circuit inductif secondaire 4. Dans ce cas, le seuil de détection est choisi suffisamment haut pour ne pas risquer de couper la charge à cause des ondulations, et la mesure de courant comprend une détermination de la variation de courant. Si la variation déterminée traduit une augmentation de courant en un temps très court devant la période des oscillations, alors l'alimentation du circuit inductif primaire 3 est coupée. La détection d'une variation rapide du courant peut être réalisée par une détection de crêtes par exemple.

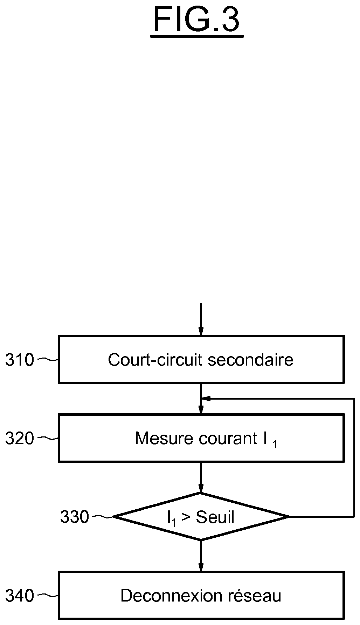

La figure 3 présente un organigramme d'un procédé de charge sécurisée sans contact d'une batterie 2 de véhicule automobile selon un mode de mise en oeuvre de l'invention.

Lors de la charge d'une batterie 2 à l'aide du système 1 de charge sans contact, le circuit inductif primaire 3 fournit à l'aide du réseau d'alimentation électrique 5 une puissance électromagnétique permettant de générer grâce au circuit inductif secondaire 4 un courant de charge de la batterie 2.

Lorsqu'un dysfonctionnement électrique survient à bord du véhicule automobile et notamment sur le circuit de charge embarqué sur le véhicule automobile, au moins un des relais 9 peut s'ouvrir de manière à découpler la batterie 2 du reste du circuit de charge, et notamment du circuit inductif secondaire 4. Dans le cas où les relais 9 ne s'ouvrent pas à cause d'un dysfonctionnement mécanique des relais 9 par exemple, le fusible 11 protège la batterie en cas de sur-courant et permet de la déconnecter du circuit inductif secondaire 4.

La déconnexion de la batterie 2 génère une augmentation de la tension aux bornes de la capacité de commande C_{2f}. Dans une étape 310, la capacité de commande C_{2f} permet d'alimenter la commande de la fermeture des interrupteurs commandés S₁ et S₂. La fermeture des interrupteurs commandés S₁ et S₂ entraîne la mise en court-circuit du circuit inductif secondaire 4.

La mise en court-circuit du circuit inductif secondaire 4 entraîne une modification de l'interaction électromagnétique entre le circuit inductif primaire 3 et le circuit inductif secondaire 4. Dans une étape suivante 320, on mesure le courant sur le circuit inductif primaire 3, puis dans une étape 330, on compare le courant mesuré à un seuil de détection.

Si le courant mesuré est inférieur au seuil, on recommence l'étape 320 de mesure, sinon, dans une étape 340, on déconnecte le circuit inductif primaire 3 du réseau d'alimentation électrique 5.

L'invention fournit un système de charge sans contact d'une batterie de véhicule automobile garantissant lors d'un dysfonctionnement électrique à bord du véhicule, la coupure de la puissance émise par le circuit inductif primaire au sol avant tout risque d'endommagement à bord du véhicule.

Préférentiellement, le bon fonctionnement de la mise en court-circuit du circuit inductif secondaire 4 est testée avant le lancement d'une charge de la batterie 2. Par exemple, si les relais de la batterie 2 sont fermés avant le lancement de la charge, on charge la capacité de résonance C₂ grâce à deux résistances que l'on vient connecter respectivement aux bornes d'une diode D du pont redresseur 8 connectée à la capacité C₂ et à la borne positive de la batterie 2, et aux bornes d'une diode D du pont redresseur 8 connectée à la borne négative de la batterie 2 et à l'inductance L₂. On ferme ensuite les interrupteurs commandés S₁ et S₂ pour court-circuiter le circuit inductif secondaire 4. On mesure alors le courant dans le circuit inductif secondaire 4, et on vérifie que ce courant mesuré est supérieur à un seuil prédéterminé afin de vérifier que la mise en court-circuit du circuit inductif secondaire 4 a bien fonctionné. Si c'est le cas, on ré-ouvre les interrupteurs commandés S₁ et S₂ afin d'autoriser la charge de la batterie 2.

En variante, par exemple si les relais de la batterie 2 en sont pas fermés lors de ce test de bon fonctionnement de la mise en court-circuit du circuit inductif secondaire 4, on déclenche la mise en sécurité du circuit inductif secondaire 4, par exemple en chargeant la capacité C_{2f} à partir du réseau de bord 14V du véhicule. On mesure alors le courant dans le circuit inductif secondaire 4, et on vérifie que ce courant mesuré est supérieur à un seuil prédéterminé afin de vérifier que la mise en court-circuit du circuit inductif secondaire 4 a bien fonctionné. Si c'est le cas, on ré-ouvre les interrupteurs commandés S₁ et S₂ afin d'autoriser la charge de la batterie 2.

## Revendications

1. Dispositif d'émission d'une onde électromagnétique pour la charge d'une batterie de véhicule automobile comprenant un circuit inductif primaire (3) alimenté par un réseau d'alimentation (5), **caractérisé en ce qu'**il comprend des moyens de commande aptes à couper l'alimentation du circuit inductif primaire (3) lorsqu'ils détectent un court-circuit du circuit inductif secondaire (4).

2. Dispositif d'émission selon la revendication 1, comprenant un onduleur (7) couplé au circuit inductif primaire (3) et commandé par les moyens de commande, les moyens de commande comprenant un capteur de courant (12) apte à mesurer le courant circulant dans le circuit inductif primaire (3) et des moyens de régulation du courant aptes à commander l'ouverture et la fermeture des interrupteurs de l'onduleur (7).

3. Système de charge (1) sans contact d'une batterie (2) de véhicule automobile comprenant un dispositif de réception d'une onde électromagnétique pour la charge d'une batterie (2), destiné à être embarqué à bord d'un véhicule automobile, comprenant un circuit inductif secondaire (4) couplé à la batterie (2) via un pont redresseur (8), et des moyens d'interruption commandée (10) aptes à mettre le circuit inductif secondaire (4) en court-circuit sans mettre la batterie (2) en court-circuit lors d'un dysfonctionnement électrique à bord du véhicule automobile, comprenant une capacité de commande (C_{2f}) des moyens d'interruption commandée (10) couplée en parallèle à la batterie (2) via des relais (9), ledit système de charge étant **caractérisé en ce qu'**il comprend également un dispositif d'émission selon l'une des revendications 1 ou 2 disposé à l'extérieur du véhicule automobile.

4. Système (1) selon la revendication 3, dans lequel les moyens de commande comprennent un module de comparaison apte à comparer le courant mesuré à un seuil de courant dépendant du niveau de charge de la batterie (2).

5. Procédé de charge sécurisée sans contact d'une batterie (2) de véhicule automobile par transfert inductif de puissance entre un circuit inductif primaire (3) à l'extérieur du véhicule automobile et un circuit inductif secondaire (4) embarqué à bord du véhicule et couplé à la batterie (2), **caractérisé en ce qu'**on met en court-circuit le circuit inductif secondaire (4) lors d'un dysfonctionnement électrique à bord du véhicule automobile, et on commande la déconnexion du circuit inductif primaire (3) du réseau d'alimentation électrique (5) lorsqu'on détecte le court-circuit du circuit inductif secondaire (4).

6. Procédé selon la revendication 5, dans lequel on commande la mise en court-circuit du circuit inductif secondaire (4) à partir de la tension aux bornes d'une capacité (C_{2f}) montée en parallèle à la batterie (2) via des relais (9).

7. Procédé selon l'une des revendications 5 ou 6, dans lequel on mesure le courant circulant dans le circuit inductif primaire (3), et on détecte le court-circuit du circuit inductif secondaire (4) à partir de la variation du courant circulant dans le circuit inductif primaire (3).

8. Procédé selon la revendication 7, dans lequel la mesure du courant circulant dans le circuit inductif primaire (3) est réalisée à la fréquence de résonance du circuit inductif primaire (3).

9. Procédé selon l'une des revendications 7 ou 8, dans lequel on compare le courant mesuré à un seuil de courant dépendant du niveau de charge de la batterie (2).

## Patentansprüche

1. Emissionsvorrichtung einer elektromagnetischen Welle zum Laden einer Kraftfahrzeugbatterie, die einen von einem Versorgungsnetz (5) versorgten primären Induktionskreis (3) enthält, **dadurch gekennzeichnet, dass** sie Steuereinrichtungen enthält, die die Versorgung des primären Induktionskreises (3) unterbrechen können, wenn sie einen Kurzschluss des sekundären Induktionskreises (4) erfassen.

2. Emissionsvorrichtung nach Anspruch 1, die einen Wechselrichter (7) enthält, der mit dem primären Induktionskreis (3) gekoppelt ist und von den Steuereinrichtungen gesteuert wird, wobei die Steuereinrichtungen einen Stromabnehmer (12), der den im primären Induktionskreis (3) fließenden Strom messen kann, und Regeleinrichtungen des Stroms enthalten, die das Öffnen und Schließen der Schalter des Wechselrichters (7) steuern können.

3. Kontaktloses Ladesystem (1) einer Kraftfahrzeugbatterie (2), das eine Empfangsvorrichtung einer elektromagnetischen Welle zum Laden einer Batterie (2) enthält, das dazu bestimmt ist, an Bord eines Kraftfahrzeugs angebracht zu werden, das einen sekundären Induktionskreis (4), der über eine Gleichrichterbrücke (8) mit der Batterie (2) gekoppelt ist, und Einrichtungen zur gesteuerten Unterbrechung (10) enthält, die bei einer elektrischen Funktionsstörung an Bord des Kraftfahrzeugs den sekundären Induktionskreis (4) kurzschließen können, ohne die Batterie (2) kurzzuschließen, das einen Steuerkondensator (C_{2f}) der Einrichtungen zur gesteuerten Unterbrechung (10) enthält, der über Relais (9) mit der Batterie (2) parallelgeschaltet ist, wobei das Ladesystem **dadurch gekennzeichnet ist, dass** es ebenfalls eine Emissionsvorrichtung nach einem der Ansprüche 1 oder 2 enthält, die außerhalb des Kraftfahrzeugs angeordnet ist.

4. System (1) nach Anspruch 3, wobei die Steuereinrichtungen ein Vergleichsmodul enthalten, das den gemessenen Strom mit einer Stromschwelle vergleichen kann, die vom Ladepegel der Batterie (2) abhängt.

5. Verfahren zur kontaktlosen sicheren Ladung einer Kraftfahrzeugbatterie (2) durch induktive Leistungsübertragung zwischen einem primären Induktionskreis (3) außerhalb des Kraftfahrzeugs und einem an Bord des Fahrzeugs befindlichen und mit der Batterie (2) gekoppelten sekundären Induktionskreis (4), **dadurch gekennzeichnet, dass** der sekundäre Induktionskreis (4) bei einer elektrischen Funktionsstörung an Bord des Kraftfahrzeugs kurzgeschlossen wird, und das Abschalten des primären Induktionskreises (3) vom elektrischen Versorgungsnetz (5) gesteuert wird, wenn der Kurzschluss des sekundären Induktionskreises (4) erfasst wird.

6. Verfahren nach Anspruch 5, wobei das Kurzschließen des sekundären Induktionskreises (4) ausgehend von der Spannung an den Klemmen eines Kondensators (C_{2f}) gesteuert wird, der über Relais (9) mit der Batterie (2) parallelgeschaltet ist.

7. Verfahren nach einem der Ansprüche 5 oder 6, wobei der im primären Induktionskreis (3) fließende Strom gemessen und der Kurzschluss des sekundären Induktionskreises (4) ausgehend von der Schwankung des im primären Induktionskreis (3) fließenden Stroms erfasst wird.

8. Verfahren nach Anspruch 7, wobei die Messung des im primären Induktionskreis (3) fließenden Stroms bei der Resonanzfrequenz des primären Induktionskreises (3) durchgeführt wird.

9. Verfahren nach einem der Ansprüche 7 oder 8, wobei der gemessene Strom mit einer Stromschwelle verglichen wird, die vom Ladepegel der Batterie (2) abhängt.

## Claims

1. Device for emitting an electromagnetic wave for the charging of a battery of an automobile vehicle comprising a primary inductive circuit (3) powered via a power supply network (5), **characterized in that** it comprises control means designed to interrupt the power supply to the primary inductive circuit (3) when they detect a short-circuit of the secondary inductive circuit (4).

2. Emission device according to Claim 1, comprising an inverter (7) coupled to the primary inductive circuit (3) and controlled by the control means, the control means comprising a current sensor (12) designed to measure the current flowing in the primary inductive circuit (3) and means for regulation of the current designed to control the opening and the closing of the switches of the inverter (7).

3. System (1) for contactless charging of a battery (2) of an automobile vehicle comprising a device for receiving an electromagnetic wave for the charging of a battery (2), designed to be installed onboard an automobile vehicle, comprising a secondary inductive circuit (4) coupled to the battery (2) via a bridge rectifier (8), and controlled interruption means (10) designed to short-circuit the secondary inductive circuit (4) without short-circuiting the battery (2) when an electrical malfunction occurs onboard the automobile vehicle, comprising a control capacitor (C2f) for the controlled interruption means (10) coupled in parallel with the battery (2) via relays (9), said charging system being **characterized in that** it also comprises an emission device according to either of claims 1 and 2 disposed outside of the automobile vehicle.

4. System (1) according to Claim 3, in which the control means comprise a comparison module designed to compare the measured current with a current threshold depending on the level of charge of the battery (2).

5. Safe contactless method for charging a battery (2) of an automobile vehicle by inductive transfer of power between a primary inductive circuit (3) outside of the automobile vehicle and a secondary inductive circuit (4) installed onboard the vehicle and coupled to the battery (2), **characterized in that** the secondary inductive circuit (4) is short-circuited when an electrical malfunction occurs onboard the automobile vehicle, and a command is sent for the disconnection of the primary inductive circuit (3) from the electrical supply network (5) when the short-circuit of the secondary inductive circuit (4) is detected.

6. Method according to Claim 5, in which the short-circuiting of the secondary inductive circuit (4) is controlled using the voltage across the terminals of a capacitor (C_{2f}) connected in parallel with the battery (2) via relays (9).

7. Method according to either of Claims 5 and 6, in which the current flowing in the primary inductive circuit (3) is measured, and the short-circuit of the secondary inductive circuit (4) is detected based on the variation of the current flowing in the primary inductive circuit (3).

8. Method according to Claim 7, in which the measurement of the current flowing in the primary inductive circuit (3) is carried out at the resonance frequency of the primary inductive circuit (3).

9. Method according to either of Claims 7 and 8, in which the measured current is compared with a current threshold depending on the level of charge of the battery (2).
